# EUROPEAN PATENT APPLICATION

(11) **EP 2 708 800 A2**
(43) Date of publication of application: **19.03.2014**
(21) Application number: 13183698.3
(22) Date of filing: 10.09.2013
(51) Int. Cl.: F21S 8/10

(54) **Vehicular lamp**

(30) Priority: 13.09.2012 JP 2012201926; 12.04.2013 JP 2013083556
(71) Applicant: Koito Manufacturing Co., Ltd., Tokyo 108-8711 (JP)
(72) Inventor: Motomura, Kenichi, Shizuoka (JP)
(74) Representative: HOFFMANN EITLE

(57) **Abstract**

A vehicular lamp (10) includes a light source (22), and a light guide body (20) having a front surface (20a) and a rear surface (20b), configured to allow light emitted from the light source to enter from the rear surface and to exit through the front surface. The rear surface of the light guide body comprises, in a first plane extending in a front-to-rear direction, a first entrance portion (20A1) configured to allow light emitted from the light source to enter in such a way as to be refracted to the front, second entrance portions (20A2) situated at both sides of the first entrance portion and configured to allow light emitted from the light source to enter in such a way as to be refracted sideways, and reflecting portions (20A3) configured to internally reflect light from the light source which enters from the second entrance portions to the front.

## Description

### BACKGROUND

### TECHNICAL FIELD

The present disclosure relates to a vehicular lamp which includes a light guide body.

### RELATED ART

As a vehicular lamp including a light guide body, JP-A-2007-250401 describes a vehicular lamp in which light emitted from a light source is designed so as to enter a rear surface and exit through a front surface of a light guide body.

JP-A-2006-48165 describes a vehicular lamp which is a signal lamp having a similar configuration to the aforesaid configuration. In this configuration, a rear surface of a light guide body includes a first entrance portion where light from a light source is allowed to enter so as to be refracted to the front, a second entrance portion where the light from the light source is allowed to enter so as to be refracted sideways on the periphery of the first entrance portion, and a reflecting portion where the light from the light source which enters from the second entrance portion is reflected internally towards the front.

### [Related Art Literature]

### [Patent Literature]

[Patent Literature 1] JP-A-2007-250401
[Patent Literature 2] JP-A-2006-48165

In the event that the configuration described in JP-A-2006-48165 is adopted as a light guide body of a vehicular lamp, the light utilization efficiency of light emitted from a light source can be enhanced.

In the light guide body described in JP-A-2006-48165, the first entrance portion is designed so that light from the light source is allowed to enter it to be parallel light traveling in the direction of a front surface of the lamp. Additionally, the reflecting portion of the light guide body is designed so that the light from the light source which enters the reflecting portion from the second entrance portion is internally reflected to be parallel light traveling towards the front surface of the lamp. Therefore, on a front surface of the light guide body, an area where the incident light from the first entrance portion reaches and an area where the internally reflected light from the reflecting portion reaches are separated from each other. Because of this, when observing the front surface of the light guide body from the front thereof, a dark portion is generated between the first entrance portion and the reflecting portion, which generates irregularity in light emission, and therefore, a problem is caused that the appearance of the lamp is deteriorated.

To cope with this problem, the position of the light source is changed slightly or the surface shapes of the first entrance portion and the reflecting portions are changed to some extent, so that the generation of the dark portion can be suppressed. However, even though these changes in configuration are adopted, there still exits a problem that the generation of irregular light emission in the light guide body cannot be suppressed effectively.

### SUMMARY

Exemplary embodiments of the invention provide a vehicular lamp including a light guide body which can suppress the generation of irregular light emission effectively while enhancing the light utilization efficiency of light emitted from a light source.

According to the exemplary embodiments, the aforesaid vehicular lamp can be realized by devising the configuration of a light guide body.

A vehicular lamp according to an exemplary embodiment comprises
a light source; and
a light guide body having a front surface and a rear surface, configured to allow light emitted from the light source to enter from the rear surface and to exit through the front surface.
The rear surface of the light guide body comprises, in a first plane extending in a front-to-rear direction, a first entrance portion configured to allow light emitted from the light source to enter in such a way as to be refracted to the front, second entrance portions situated at both sides of the first entrance portion and configured to allow light emitted from the light source to enter in such a way as to be refracted sideways, and reflecting portions configured to internally reflect light from the light source which enters from the second entrance portions to the front.
The first entrance portion is configured to allow light emitted from the light source to enter as diffuse light in the first plane.
The reflecting portions are configured to reflect light from the light source which enters from the second entrance portions as diffuse light in the first plane.

There is imposed no specific limitation on the type of the "light source", and hence, for example, a light emitting diode can be adopted.

The "light guide body" may be configured as a body of rotation or may be configured as a light guiding plate which extends along a first plane.

There is imposed no specific limitation on the orientation of the "first plane", provided that the first plane is a plane which extends in a front-to-rear direction.

The "first entrance portion" should be configured so that the light from the light source is allowed to enter to be diffuse light at least in the first plane. Thus, the first entrance portion may be or may not be configured so that the light from the light source is allowed to enter to be diffuse light in a plane which intersects the first plane.

The "reflecting portion" should be configured so that the light from the light source which enters from the second entrance portion is allowed to be reflected to be diffuse light at least in the first plane. Thus, the reflecting portion may be or may not be configured so that the light from the light source which enters from the second entrance portion is allowed to be reflected to be diffuse light in a plane which intersects the first plane.

In the configuration described above, the rear surface of the light guide body comprises, in the first plane extending in the front-to-rear direction, the first entrance portion configured to allow light emitted from the light source to enter in such a way as to be refracted to the front, the second entrance portions situated at the both sides of the first entrance portion and configured to allow light emitted from the light source to enter in such a way as to be refracted sideways, and the reflecting portions configured to internally reflect light from the light source which enters from the second entrance portions to the front. Therefore, the light utilization efficiency of light emitted from a light source can be enhanced.

The first entrance portion is formed so that light from the light source is allowed to enter as diffuse light in the first plane. In addition, the reflecting portions are each formed so that light from the light source which enters from the corresponding second entrance portion is reflected as diffuse light. Therefore, the area where incident light from the first entrance portion reaches and the area where internally reflected light from each reflecting portion reaches can overlap each other over a wide range on the front surface of the light guide body. Because of this, when the front surface of the light guide body is observed from the front thereof, the generation of a dark portion between the first entrance portion and each of the reflecting portions can be prevented in an ensured fashion, thereby making it possible to suppress the generation of irregular light emission in the light guide body effectively.

According to the exemplary embodiment, in the vehicular lamp including the light guide body, it is possible to suppress the generation of irregular light emission effectively while enhancing the light utilization efficiency of light emitted from a light source. By adopting this configuration, an external appearance of the vehicular lamp can be enhanced.

In the configuration described above, in the event that the light guide body is configured as a light guiding plate which extends along the first plane, when the front surface of the light guide body is observed from the front thereof, the light guide body can be seen as being illuminated into a belt-like shape.

In the event that a lens is disposed so as to surround the light source between the light guide body and the light surface, although the light guide body is configured as the light guiding plate, light emitted from the light source is allowed to enter the light guide body with good efficiency.

In addition, a plurality of sets of the first entrance portion, the second entrance portions and the reflecting portions are formed along the first plane on the rear surface of the light guide body which is configured as the light guiding plate, when the front surface of the light guide body is seen from the front thereof, the light guide body can be seen as being illuminated into a thin elongated belt-like shape.

In the configuration described above, in the event that the front surface of the light guide body is configured as a light diffusing surface, the light guide body can be seen as being illuminated more uniformly.

In the configuration described above, in the event that the first entrance portion is configured so that light from the light source is allowed to enter as diffuse light in a second plane which intersects the first plane at right angles, and in the event that each reflecting portion is configured so that light from the light source which enters from the corresponding second entrance portion is reflected as diffuse light, even though the front surface of the light guide body is not formed so as to diffuse light in the second plane or the extent to which light is diffused is set small, light emanating from the front surface of the light guide body can be diffused in a direction following the second plane. Then, by adopting this configuration, an external appearance of the light guide body when the vehicular lamp is not illuminated can be enhanced. As this occurs, this configuration can also be applied to either of the first entrance portion and the reflecting portions.

### BRIEF DESCRIPTION OF THE DRAWINGS

Fig. 1 is a sectional plan view showing a vehicular lamp according to an embodiment of the invention.
Fig. 2 is a sectional view taken along the line II-II in Fig. 1.
Fig. 3 is a perspective view of a light guide body as a single part as seen obliquely from thereabove.
Fig. 4A is a view showing part of the light guide body which is cut out from Fig. 1.
Fig. 4B is a view similar view to that shown in Fig. 4A showing a comparative view.
Fig. 5 is a sectional plan view showing a main part of a vehicular lamp according to a first modified example.
Fig. 6 is a sectional view taken along the line VI-VI in Fig. 5.
Fig. 7 is a sectional plan view showing a main part of a vehicular lamp according to a second modified example.
Fig. 8A is a sectional view taken along the line VIII(a)-VIII(a) in Fig. 7.
Fig. 8B is a sectional view taken along the line VIII(b)-VIII(b) in Fig. 7.
Figs. 9A and 9B are views similar to Figs. 8A and 8B, respectively, showing a main part of a vehicular lamp according to a third modified example.
Figs. 10A and 10B are views similar to Figs. 8A and 8B, respectively, showing a main part of a vehicular lamp according to a fourth modified example.
Fig. 11 is a view similar to Fig. 6 showing a main part of a vehicular lamp according to a fifth modified example.

### DETAILED DESCRIPTION

Hereinafter, an embodiment of the invention will be described by the use of the drawings.

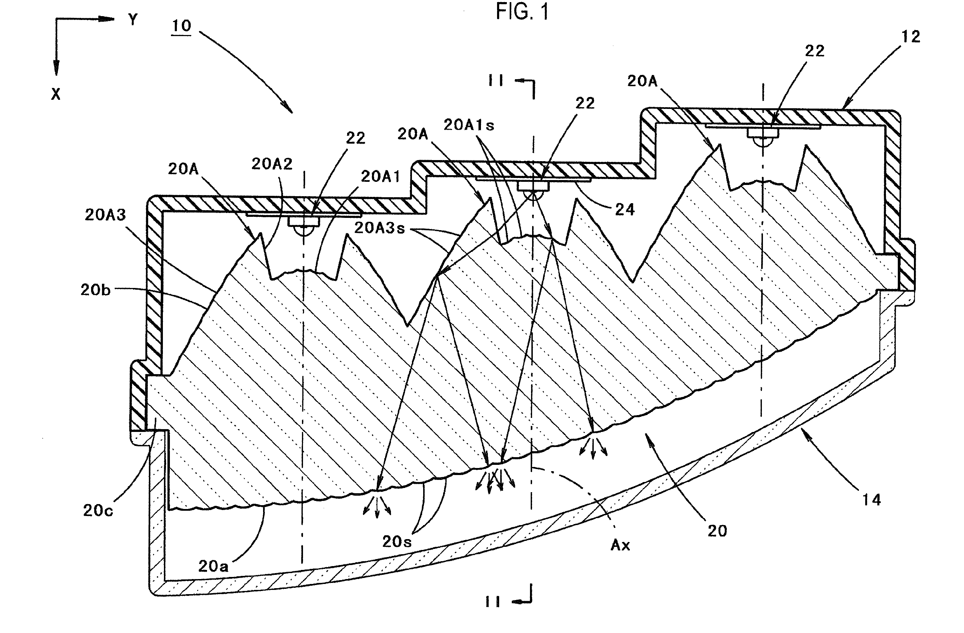

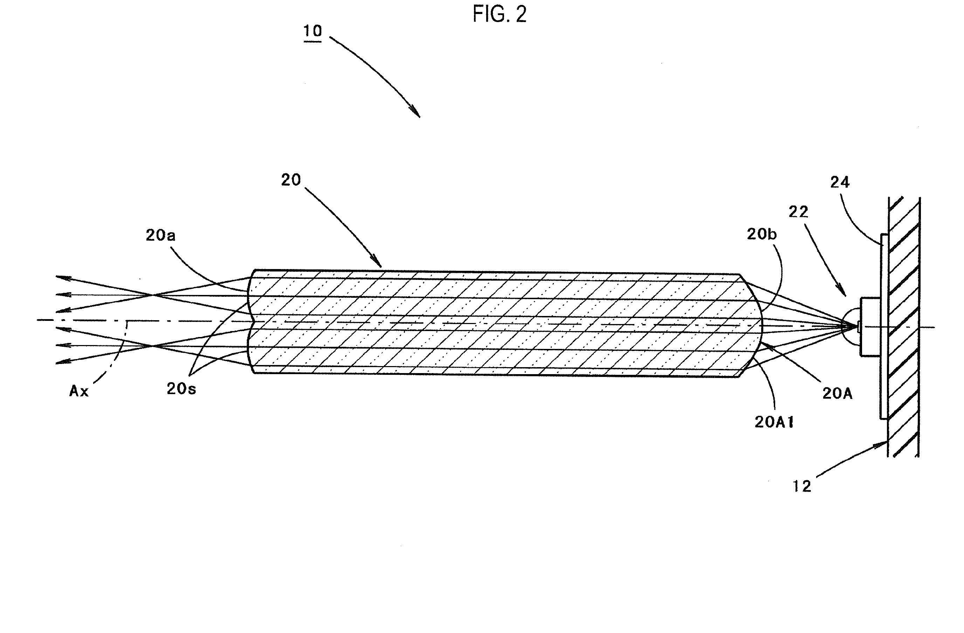

Fig. 1 is a sectional plan view showing a vehicular lamp 10 according to an embodiment of the invention. In addition, Fig. 2 is a sectional view taken along the line II-II in Fig. 1.

As shown in these figures, the vehicular lamp 10 according to the embodiment is a tail lamp which is provided at a right rear end portion of a vehicle and has a configuration in which three light sources 22 and a light guide body 20 are incorporated in a lamp chamber which is defined by a lamp body 12 and a transparent light transmitting cover 14 which is attached to a front end opening portion of the lamp body 12.

It is noted that in the vehicular lamp 10 shown in Fig. 1, a direction denoted by an arrow X denotes a "front" (a "rear" of the vehicle), and a direction denoted by an arrow Y is a "rightward direction" which intersects the "front" at right angles.

The light transmitting cover 14 is formed so as to extend transversely and rearward from a left end portion towards a right end portion.

The three light sources 22 are all a red light emitting diode and are disposed in the vicinity of a rear of the light guide body 20 with their light emitting surfaces directed to the front. The three light sources 22 are disposed in a left-to-right or transverse direction at equal intervals on the same horizontal plane and with respect to two of the light sources 22 arranged next to each other, the light source on the right is disposed rearward from the light source on the left. These light sources 22 are supported individually on light source supporting members 24, and these light source supporting members 24 are supported on the lamp body 12.

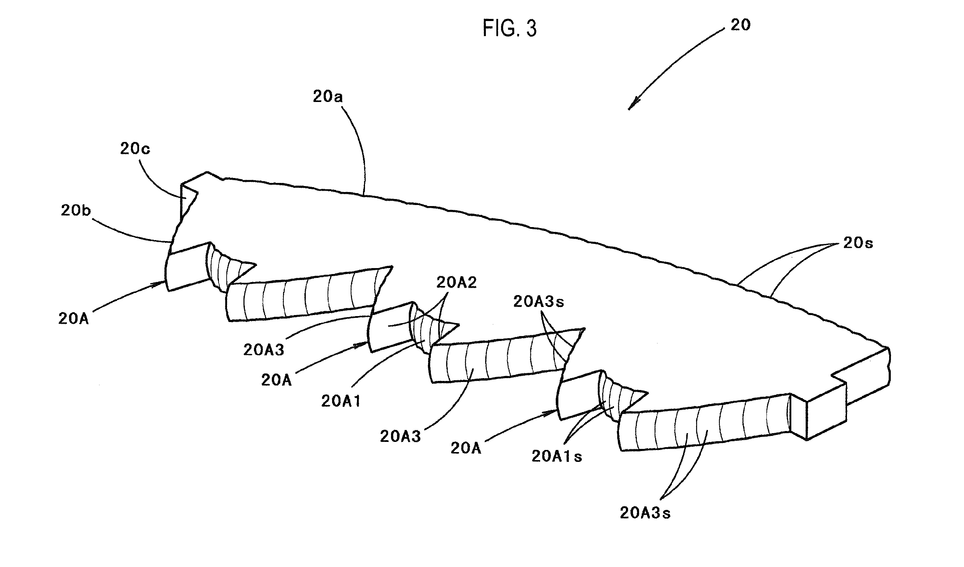

Fig. 3 is a perspective view of the light guide body 20 as a single part as seen obliquely from thereabove.

As shown also in Fig. 3, the light guide body 20 is a transparent molded part which is formed from synthetic resin such as acryl resin and is configured as a light guiding plate which extends along a horizontal plane. In addition, the light guide body 20 is designed so that light emitted from the light sources 22 enters a rear surface 20b and exits through a front surface 20a of the light guide body 20. Flange portions 20c are formed at left and right end portions of the light guide body 20, whereby the light guide body 20 is supported on the lamp body 12 at the pair of left and right flange portions 20c.

The front surface 20a of the light guide body 20 is formed so as to extend transversely and rearward from the left end portion to the right end portion along the light transmitting cover 14. The front surface 20a is configured as a light diffusing surface which diffuses vertically and horizontally light that is emitted from the light sources 22 and enters from the rear surface 20b to reach the front surface 20a of the light guide body 20. Specifically, a plurality of diffuse lens elements 20s each having a fish-eye lens configuration are formed on the front surface 20a in two rows in a vertical direction.

On the other hand, the rear surface 20b of the light guide body 20 is configured so that three light control portions 20A which each control light emitted from each of the light sources 22 are formed at three locations on the rear surface 20b so as to lie adjacent to each other in the transverse direction. In these three light control portions 20A, with respect to two of the light control portions 20A arranged next to each other, the light control portion on the right is disposed rearward from the light control portion on the left.

These three light control portions 20A have the same configuration. Then, in the following description, the central light control portion 20A will be described.

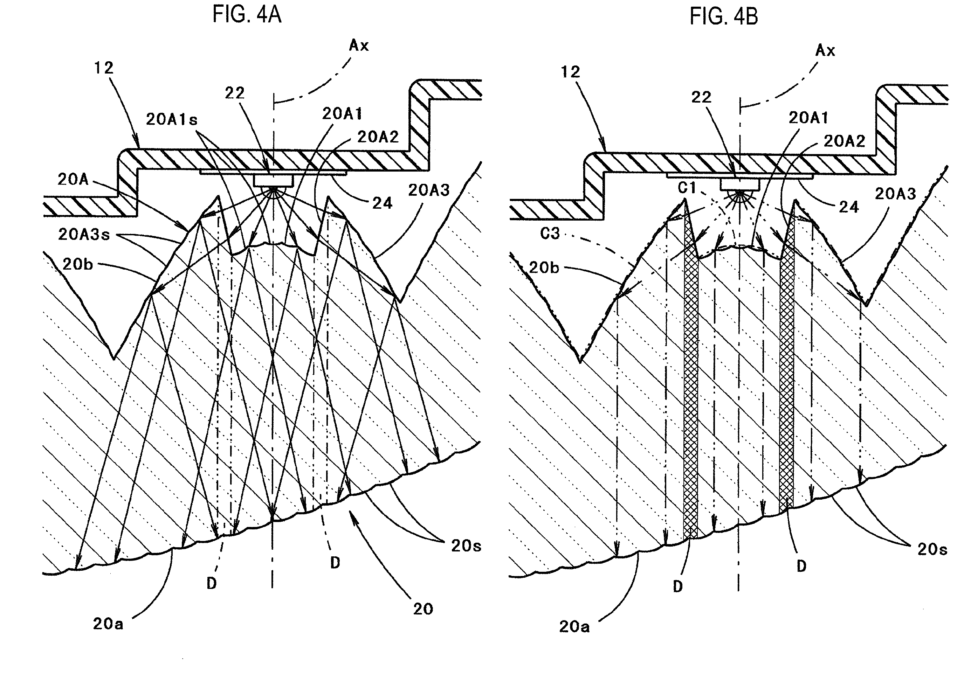

Fig. 4A is a view similar view to that shown in Fig. 1 which shows part of the light guide body 20 which is cut out so as to include the central light control portion 20A.

As shown also in Fig. 4A, in a horizontal plane, the light control portion 20A includes a first entrance portion 20A1 where light from the light source 22 is allowed to enter to be refracted to the front, a pair of left and right second entrance portions 20A2 which are formed at both sides of the first entrance portion 20A1 so that light from the light source 22 is allowed to enter to be refracted sideways, and a pair of left and right reflecting portions 20A3 which reflect internally and totally the light from the light source 22 which enters from the second entrance portions 20A2 to the front.

The first entrance portion 20A1 is formed in an area which straddles transversely an axis Ax which extends in a front-to-rear or longitudinal direction so as to pass through a luminous center of the light source 22.

The first entrance portion 20A1 is configured so as to allow light from the light source 22 to enter so that the light is not diffused vertically but is diffused horizontally. Specifically, in the first entrance portion 20A1, a plurality of diffusing lens elements 20A1s are arranged so as to form vertical stripes on a curved surface where light from the light source 22 is allowed to enter to be light parallel to the axis Ax (that is, a surface which is curved convexly towards the rear).

The pair of left and right second entrance portions 20A2 are made up of vertical planes which extend from left- and right-hand side edges of the first entrance portion 20A1 to the rear while expanding transversely.

The pair of left and right reflecting portions 20A3 are formed so as to extend from rear edges of the second entrance portions 20A2 to the front while expanding transversely. A plurality of diffusing lens elements 20A3s are arranged so as to form vertical stripes on a curved surface of each reflecting portion 20A3 which reflects incident light from the corresponding second entrance portion 20A2 so as to be light parallel to the axis Ax (that is, a surface which is curved convexly to the rear). Therefore, incident light from the corresponding second entrance portion 20A2 is reflected as light which is not diffused vertically but is diffused horizontally.

Next, the function and advantage of the embodiment will be described.

In the vehicular lamp 10 according to the embodiment, in the horizontal plane (that is, a first plane which extends in the longitudinal direction), the rear surface 20b of the light guide body 20 includes the first entrance portion 20A1 where light from the light source 22 is allowed to enter to be refracted to the front, the pair of left and right second entrance portions 20A2 which are formed at both the sides of the first entrance portion 20A1 so that light from the light source 22 is allowed to enter to be refracted sideways, and the pair of left and right reflecting portions 20A3 which reflect internally the light from the light source 22 which enters from the second entrance portions 20A2 to the front. Therefore, the light utilization efficiency of light emitted from the light source 22 can be enhanced.

The first entrance portion 20A1 is configured so as to allow light from the light source 22 to enter to be diffuse light in the horizontal plane. In addition, the reflecting portions 20A3 are configured so as to reflect the light from the light source 22 which enters from the second entrance portions 20A2 to be diffuse light in the horizontal plane. Therefore, the following function and advantage can be obtained.

Namely, as shown in Fig. 4B, in case the first entrance portion 20A1 is made up of a curved surface C1 which allows light from the light source 22 to enter to be light parallel to the axis Ax, and in case the reflecting portions 20A3 are each made up of a curved surface C3 which reflects the light from the light source 22 which enters from the corresponding second entrance portion 20A2 to be light parallel to the axis Ax, an area where the incident light from the first entrance portion 20A1 reaches and an area where the internally reflected light from the reflecting portion 20A3 reaches is separated by the transverse width of the second entrance portion 20A2 on the front surface 20a of the light guide body 20. Thus, when observing the front surface 20a of the light guide body 20 from the front thereof, the portions defined between the two areas (that is, portions shaded in the figure) are seen as dark portions D.

In contrast with this, in the embodiment, as shown in Fig. 4A, the first entrance portion 20A1 is configured so as to allow light from the light source 22 to enter to be diffuse light in the horizontal plane, and the reflecting portions 20A3 are each configured so as to reflect the light from the light source 22 which enters from the corresponding second entrance portion 20A2 to be diffuse light in the horizontal plane. Therefore, an area where the incident light from the first entrance portion 20A1 reaches and an area where the internally reflected light from the reflecting portion 20A3 reaches are allowed to overlap each other over a wide range on the front surface 20a of the light guide body 20. Because of this, when the front surface 20a of the light guide body 20 is observed from the front thereof, the generation of a dark portion D between the first entrance portion 20A1 and the reflecting portions 20A3 can be prevented in an ensured fashion, whereby the generation of irregular light emission can be suppressed effectively.

In this way, according to the embodiment, in the vehicular lamp 10 including the light guide body 20, the generation of irregular light emission can be suppressed effectively while enhancing the light utilization efficiency of light emitted from the light source 22. In addition, the external appearance of the lamp can be improved.

Moreover, in the embodiment, since the light guide body 20 is configured as the light guiding plate which extends along the horizontal plane, when the front surface 20a of the light guide body 20 is observed from the front thereof, the light guide body 20 can be seen as being illuminated in a horizontally elongated belt-like shape.

In particular, in the embodiment, the three light control portions 20A each including one first entrance portion like the first entrance portion 20A1, two second entrance portions like the second entrance portions 20A2 and two reflecting portions like the reflecting portions 20A3 are formed along the horizontal plane on the rear surface 20b of the light guide body 20. Therefore, when the front surface 20a of the light guide body 20 is observed from the front thereof, the light guide body 20 can be seen as being illuminated in a thin horizontally elongated belt-like shape.

In addition, in the embodiment, since the front surface 20a of the light guide body 20 is configured as the light diffusing surface, the light guide body 20 can be seen as being illuminated uniformly.

In the embodiment, while the vehicular lamp 10 is described as being applied to the tail lamp which is provided at the right rear end portion of the vehicle, irrespective of the location on the vehicle where the vehicular lamp 10 is provided or a function given thereto, by adopting the same configuration as that of the embodiment, the same function and advantage as those of the invention can be obtained. For example, the vehicular lamp 10 can also be applied to a stop lamp, a daytime running lamp, or a clearance lamp in addition to the tail lamp. As this occurs, in addition to the red light emitting diode, a white or amber light emitting diode can be used to match a function given to the lamp to which the vehicular lamp 10 is applied.

Next, modified examples made to the embodiment above will be described.

Firstly, a first modified example made to the embodiment above will be described.

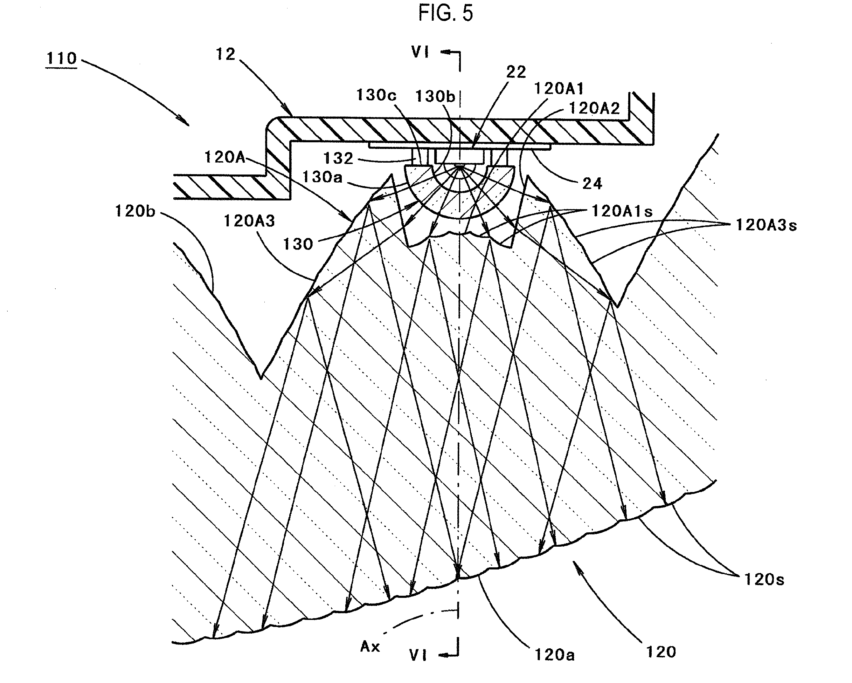

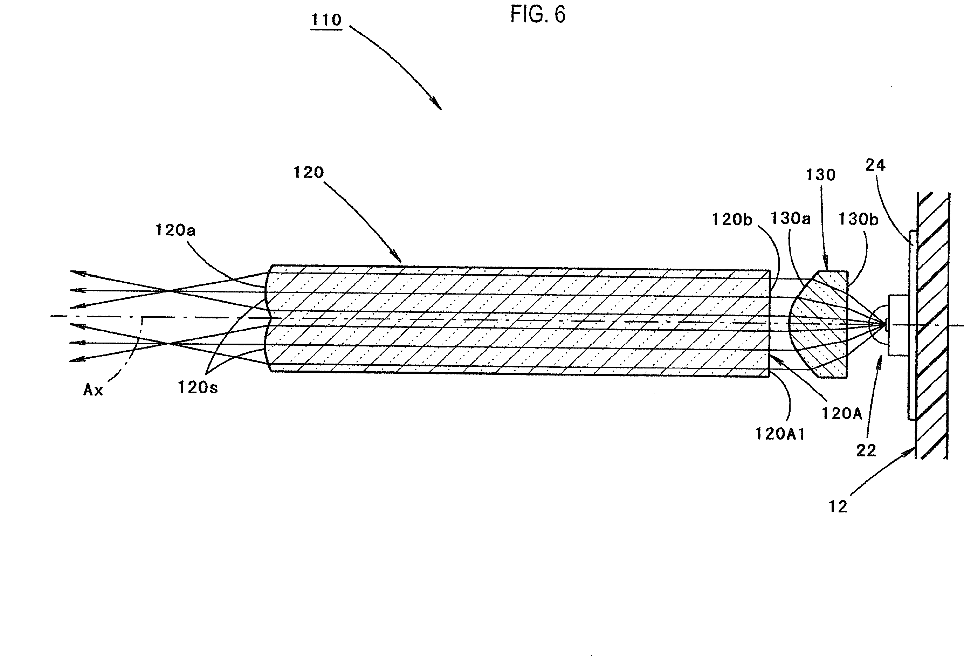

Fig. 5 is a sectional plan view showing a main part of a vehicular lamp 110 according to the first modified example. In addition, Fig. 6 is a sectional view taken along the line VI-VI in Fig. 5.

As shown in these figures, a basic configuration of the vehicular lamp 110 according to the first modified example is the same as that of the embodiment described above. However, the first modified example differs from the embodiment in that a lens 130 is disposed between a light guide body 120 and a light source 22 so as to surround the light source 22.

The lens 130 is formed by a toroidal lens which extends along a horizontal surface into an arc shape which is centered at a luminous center of the light source 22. As this occurs, a front surface 130a of the lens 130 is formed by a convex curve when seen along a vertical section thereof, and a rear surface 130b is formed by a straight line when seen along a vertical section thereof. Then, the lens 130 is configured so that light from the light source 22 is emitted therefrom as parallel light which is not diffused vertically in a vertical plane while in a horizontal plane the light is emitted radially without being deflected.

Both end faces 130c of the lens 130 which extends into the arc shape are situated in positions which rotate through 90° in left and right directions from an axis Ax, whereby the lens 130 is supported on a light source supporting member 24 at the pair of left and right end faces 130c via a pair of left and right lens supporting members 132.

A basic configuration of the light guide body 120 is the same as that of the light guide body 20 of the embodiment described above, but the light guide body 120 differs from the light guide body 20 in that the rear surface 120b is not formed by a convex curve but is formed by a straight line.

In the light emitting element 120, however, as with the light emitting element 20 of the embodiment described above, a light control portion 120A is formed on the rear surface 120b, and the light control portion 120A includes a first entrance portion 120A1, second entrance portions 120A2 and reflecting portions 120A3. In addition, the first entrance portion 120A1 has a plurality of diffusing lens elements 120A1s arranged so as to form vertical stripes, whereby light emitted from the lens 130 is allowed to enter to be light which is not diffused vertically but is diffused horizontally. Additionally, each reflecting portion 120A3 has a plurality of diffusing lens elements 120A3s arranged so as to form vertical stripes, whereby light emitted from the lens 130 and entering from the corresponding second entrance portion 120A2 is allowed to be reflected to be light which is not diffused vertically but is diffused horizontally.

As with the light guide body 20 of the embodiment described above, a front surface 120a of the light guide body 120 is configured as a light diffusing surface by forming a plurality of diffusing lens elements 120s thereon.

The lens 130 is disposed in a space defined by the first entrance portion 120A1 and the second entrance portions 120A2 which are situated at both sides of the first entrance portion 120A1.

By adopting the configuration of the first modified example, although the light guide body 120 is configured as a light guiding plate, light emitted from the light source 22 is allowed to enter the light guide body 120 with good efficiency. Namely, more light emitted from the light source 22 is allowed to enter the light guide body 120. In addition, a light deflection amount at the rear surface 130b and the front surface 130a of the lens 130 is made smaller than a light deflection amount at the rear surface 20b of the light guide body 20 of the embodiment described above, thereby making it possible to reduce the loss of light resulting from surface reflection.

Next, a second modified example made to the embodiment described above will be described.

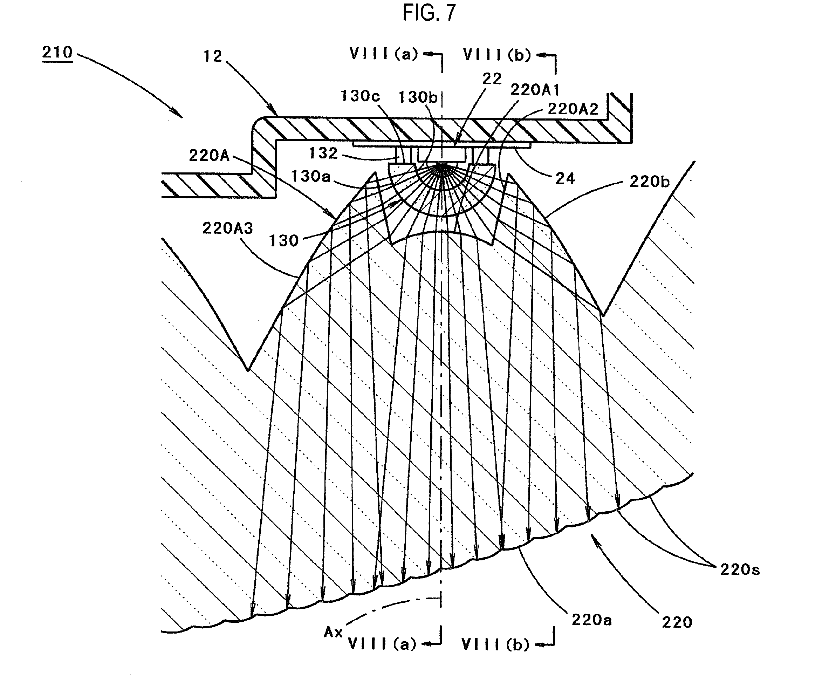

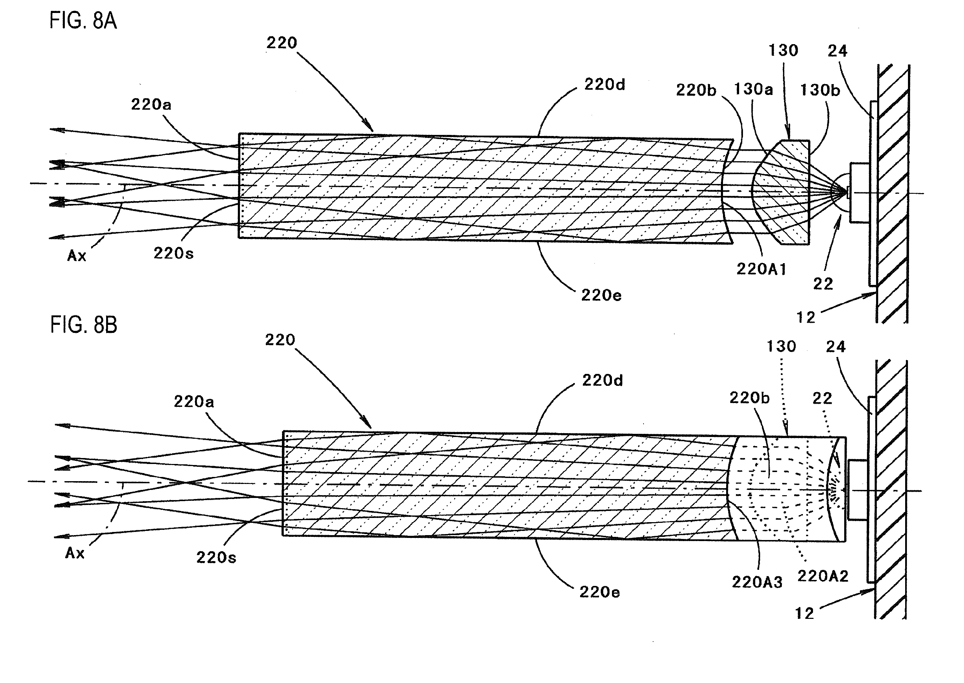

Fig. 7 is a sectional plan view showing a main part of a vehicular lamp 210 according to the second modified example. In addition, Fig. 8A is a sectional view taken along the line VIII(a)-VIII(a) in Fig. 7, and Fig. 8B is a sectional view taken along the line VIII(b)-VIII(b) in Fig. 7.

As shown in these figures, although a basic configuration of the vehicular lamp 210 according to the second modified example is the same as that of the first modified example above, surface configurations of a rear surface 220b and a front surface 220a of a light guide body 220 differ from those of the light guide body 120 of the first modified example above.

Namely, in the light guide body 220 of the second modified example, a light control portion 220A is formed on the rear surface 220b, and the light control portion 220A includes a first entrance portion 220A1, second entrance portions 220A2 and reflecting portions 220A3. However, the first entrance portion 220A1 and the reflecting portions 220A3 are each formed by a single curved surface.

As shown in Fig. 7, the first entrance portion 220A1 is formed by a convex curve as seen along a horizontal section thereof, and a curvature thereof is set to such a magnitude that allows light emitted from a lens 130 to enter to be light which is diffused horizontally to some extent. In addition, as shown in Fig. 7, each reflecting portion 220A3 is also formed by a convex curve as seen along a horizontal section thereof, and a curvature thereof is set to such a magnitude that allows light emitted from the lens 130 and entering from the corresponding second entrance portion 220A2 to be reflected to be light which is diffused horizontally to some extent.

Additionally, by adopting this configuration, an area where incident light from the first entrance portion 220A1 reaches and an area where internally reflected light from the reflecting portion 220A3 reaches are allowed to overlap each other on the front surface 220a of the light guide body 220.

In addition, as shown in Fig. 8A, the first entrance portion 220A1 is formed by a concave curve as seen along a vertical section thereof, so that light emitted from the lens 130 is allowed to enter to be light which is diffused vertically. In addition, as shown in Fig. 8B, each reflecting portion 220A3 is also formed by a concave curve as seen along a vertical section thereof, so that light emitted from the lens 130 and entering from the corresponding second entrance portion 220A2 is allowed to be reflected to be light which is diffused vertically.

By adopting this configuration, the incident light from the first entrance portion 220A1 and the reflected light from the reflecting portions 220A3 are partially reflected totally internally by an upper surface 220d or a lower surface 220e of the light guide body 220 and are then allowed to reach the front surface 220a as light which is diffused vertically.

As shown in Fig. 7, in the light guide body 220 of the second modified example, the front surface 220a is configured as a light diffusing surface which diffuses horizontally light which is emitted from each light source 22, enters from the rear surface 220b and reaches the front surface 220a. Specifically, the front surface 220a has a plurality of cylindrical lens-shaped diffusing lens elements 220s arranged so as to form vertical stripes.

By adopting this configuration, the diffuse light traveling from the first entrance portion 220A1 and the reflecting portions 220A3 and reaching the front surface 220a is allowed to be emitted from the front surface 220a as light which is diffused horizontally further.

Also, in the case of the configuration of the second modified example being adopted, an area where incident light from the first entrance portion 220A1 reaches and an area where internally reflected light from the reflecting portion 220A3 reaches are allowed to overlap each other on the front surface 220a of the light guide body 220. Therefore, when the front surface 220a of the light guide body 220 is observed from the front thereof, the generation of a dark portion between the first entrance portion 220A1 and each reflecting portion 220A3 can be prevented in an ensured fashion, thereby making it possible to suppress the generation of irregular light emission effectively.

In addition, in the second modified example, the first entrance portion 220A1 allows light emitted from the lens 130 to enter to be light which is diffused vertically, and each reflecting portion 220A3 reflects light emitted from the lens 130 and entering from the corresponding second entrance portion 220A2 to be light which is diffused vertically. Therefore, although the plurality of diffusing lens elements 220s which are formed on the front surface 220a of the light guide body 220 have no function to diffuse light vertically, light emitted from the front surface 220a is allowed to be diffused vertically.

Additionally, by adopting the configuration of the second modified example in which the front surface 220a has the plurality of cylindrical lens-shaped diffusing lens elements 220s arranged so as to form vertical stripes, the external appearance of the light guide body 220 when the lamp is not illuminated can be enhanced.

Next, a third modified example made to the embodiment above will be described.

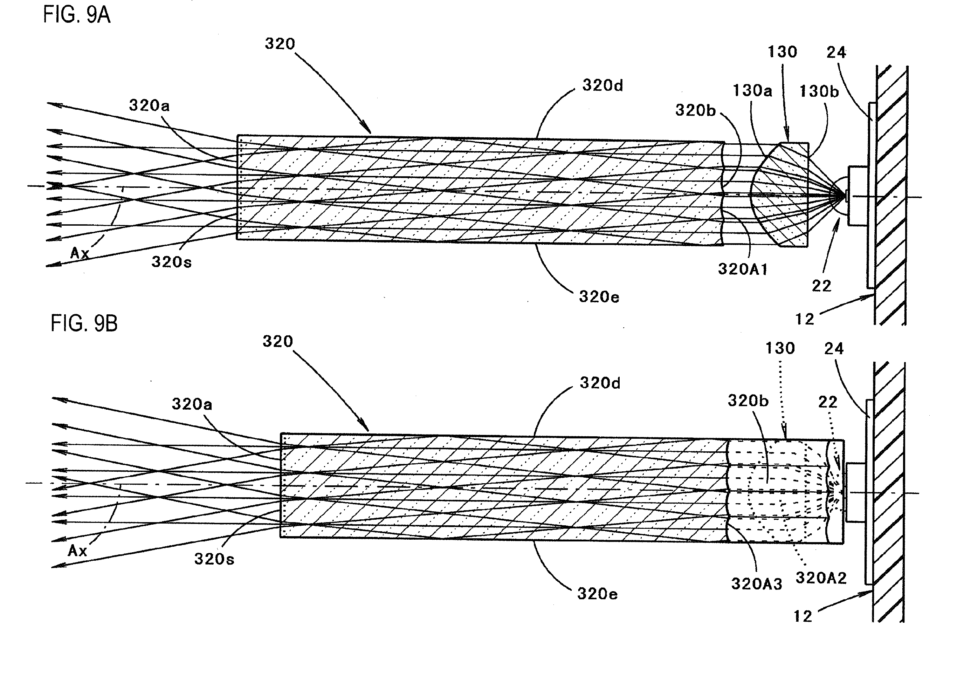

Figs. 9A and 9B are similar to Figs. 8A and 8B, respectively, and show a main part of a vehicular lamp according to the third modified example.

As shown in these figures, a basic configuration of the vehicular lamp according to the third modified example is the same as that of the second modified example. However, vertical sectional configurations of a first entrance portion 320A1 and reflecting portions 320A3 on a rear surface 320b of a light guide body 320 are different from those of the light guide body 220 of the second modified example.

Namely, in the third modified example, the first entrance portion 320A1 has four lens elements which are formed by four concave curves as seen along a vertical section thereof, and each reflecting portion 320A3 has four reflecting elements formed by four concave curves as seen along a vertical section thereof.

Then, the four lens elements and four reflecting elements allow incident light from the first entrance portion 320A1 and reflected light from each reflecting portion 320A3 to be partially reflected totally internally on an upper surface 320d or a lower surface 320e of the light guide body 320 and thereafter to reach the front surface 320a as light which is diffused vertically.

Also, in the case of the configuration of the third modified example being adopted, although the plurality of diffusing lens elements 320s which are formed on the front surface 320a of the light guide body 320 have no function to diffuse light vertically, light which is emitted from the front surface 320a is allowed to be diffused vertically. Then, by adopting this configuration, the same function and advantage as those of the second modified example can be obtained.

Next, a fourth modified example made to the embodiment described above will be described.

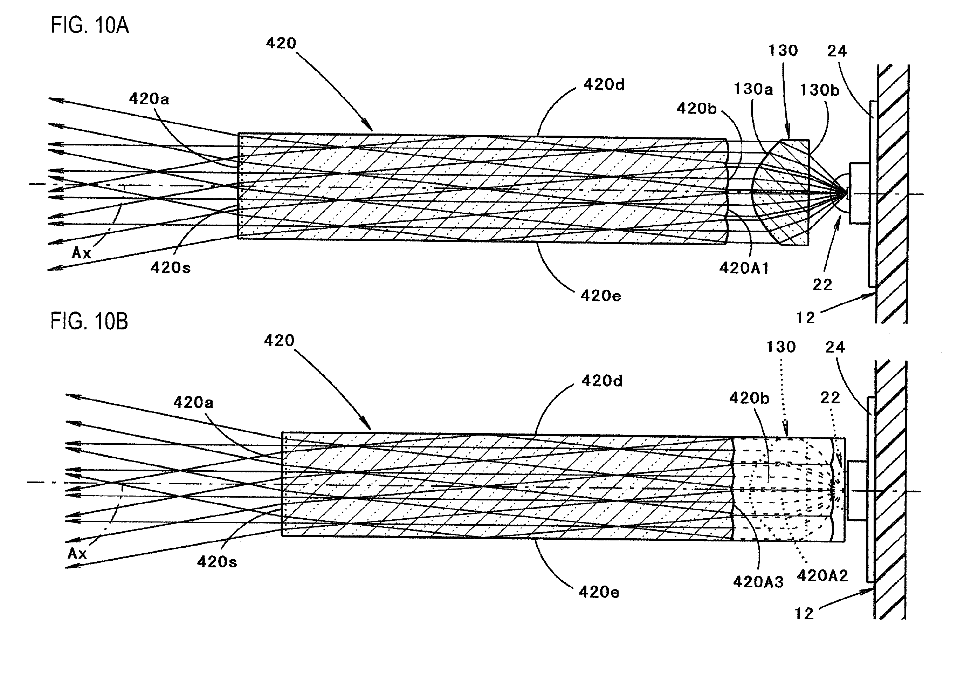

Figs. 10A and 10B are similar to Figs. 8A and 8B, respectively, and show a main part of a vehicular lamp according to the fourth modified example.

As shown in these figures, a basic configuration of the vehicular lamp according to the fourth modified example is the same as that of the second modified example. However, vertical sectional configurations of a first entrance portion 420A1 and reflecting portions 420A3 on a rear surface 420b of a light guide body 420 are different from those of the light guide body 220 of the second modified example.

Namely, in the fourth modified example, the first entrance portion 420A1 has four lens elements which are formed by four convex curves as seen along a vertical section thereof, and each reflecting portion 420A3 has four reflecting elements formed by four convex curves as seen along a vertical section thereof.

Then, the four lens elements and four reflecting elements allow incident light from the first entrance portion 420A1 and reflected light from each reflecting portion 420A3 to pass through or near respective focal point positions of the lens elements and the reflecting elements and thereafter to be partially reflected totally internally on an upper surface 420d or a lower surface 420e of the light guide body 420 to reach the front surface 420a as light which is diffused vertically.

Also, in the case of the configuration of the fourth modified example being adopted, although the plurality of diffusing lens elements 420s are formed on the front surface 420a of the light guide body 420 which have no function to diffuse light vertically, light which is emitted from the front surface 420a is allowed to be diffused vertically. Then, by adopting this configuration, the same function and advantage as those of the second modified example can be obtained.

Next, a fifth modified example made to the embodiment described above will be described.

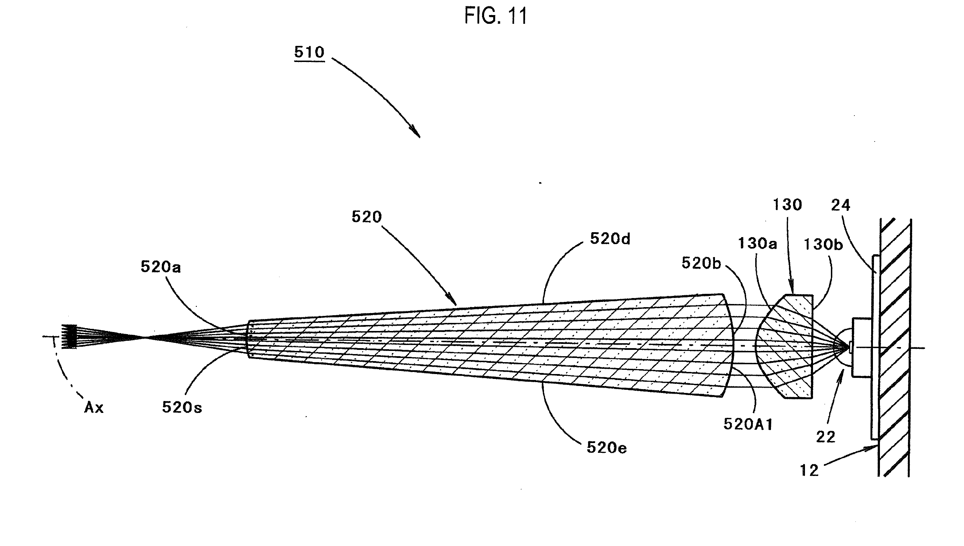

Fig. 11 is similar to Fig. 6 and shows a main part of a vehicular lamp 510 according to the fifth modified example.

As shown in the figure, a basic configuration of the vehicular lamp 510 according to the fifth modified example is the same as that of the first modified example. However, the vehicular lamp 510 differs from the vehicular lamp 110 in that a vertical sectional configuration of a light guiding unit 520 differs from that of the light guide body 220 of the first modified example.

Namely, the light guide body 520 of the fifth modified example is tapered so that a vertical width thereof which is defined by an upper surface 520d and a lower surface 520e thereof is gradually narrowed as the light guide body 520 extends to the front.

In addition, in the light guide body 520 of the fifth modified example, a first entrance portion 520A1 of a rear surface 520b thereof is formed by a convex curve as seen along a vertical section thereof, so that light from a lens 130 is allowed to enter to be light which is converged vertically to some extent. As this occurs, the magnitude of a curvature of the convex curve is set so that a degree of convergence of incident light from the first entrance portion 520A1 substantially coincides with a degree of narrowing of the vertical width of the light guide body 520.

In the light guide body 520 of the fifth modified example, a front surface 520a thereof is configured as a light diffusing surface which diffuses horizontally light emitted from the lens 130 which enters from the rear surface 520b thereof and reaches the front surface 520a. Specifically, the front surface 520a has a plurality of diffusing lens elements 520s arranged so as to form vertical stripes. The front surface 520a is formed into a convex curve as seen along a vertical section thereof, whereby light which reaches the front surface 520a is allowed to be diffused vertically.

In addition, in the light guide body 520 of the fifth modified example, a vertical sectional configuration of a location where each reflecting portion (not shown) is provided is the same as the vertical sectional configuration of the location where the first entrance portion 520A1 is provided.

Also, in the case of the configuration of the fifth modified example being adopted, the same function and advantage as those of the first modified example can be obtained.

In addition, as described in the fifth modified example, by configuring the light guide body 520 as the light guiding plate which is tapered, the front surface 520a of the light guide body 520 is allowed to be seen as being illuminated brighter.

It is noted that the numeric values shown as the specifications in the embodiment and its modified examples are shown only as examples, and these numeric values may, of course, be set to different values as required.

In addition, the invention is not limited to the configurations described in the embodiment and its modified examples, and hence, in addition to them, configurations including additional various alterations or modifications can be adopted.

## Claims

1. A vehicular lamp (10, 110, 210, 510) comprising:
a light source (22); and
a light guide body (20, 120, 220, 320, 420, 520) having a front surface (20a, 120a, 220a, 320a, 420a, 520a) and a rear surface (20b, 120b, 220b, 320b, 420b, 520b), configured to allow light emitted from the light source to enter from the rear surface and to exit through the front surface, wherein
the rear surface of the light guide body comprises, in a first plane extending in a front-to-rear direction, a first entrance portion (20A1, 120A1, 220A1, 320A1, 420A1, 520A1) configured to allow light emitted from the light source to enter in such a way as to be refracted to the front, second entrance portions (20A2, 120A2, 220A2, 320A2, 420A2, 520A2) situated at both sides of the first entrance portion and configured to allow light emitted from the light source to enter in such a way as to be refracted sideways, and reflecting portions (20A3, 120A3, 220A3, 320A3, 420A3, 520A3) configured to internally reflect light from the light source which enters from the second entrance portions to the front, wherein
the first entrance portion (20A1, 120A1, 220A1, 320A1, 420A1, 520A1) is configured to allow light emitted from the light source to enter as diffuse light in the first plane, and wherein
the reflecting portions (20A3, 120A3, 220A3, 320A3, 420A3, 520A3) are configured to reflect light from the light source which enters from the second entrance portions as diffuse light in the first plane.

2. The vehicular lamp according to Claim 1, wherein
the light guide body is configured as a light guiding plate which extends along the first plane.

3. The vehicular lamp according to Claim 2, further comprising:
a lens (130) disposed so as to surround the light source, between the light source and the light guide body.

4. The vehicular lamp according to Claim 2 or 3, wherein
a plurality of sets of the first entrance portion, the second entrance portions and the reflecting portions are formed along the first plane on the rear surface of the light guide body.

5. The vehicular lamp according to any of Claims 1 to 4, wherein
the front surface of the light guide body has a light diffusing surface (20s, 120s, 220s, 320s, 420s, 520s).

6. The vehicular lamp according to any of Claims 1 to 5, wherein
the first entrance portion (220A1, 320A1, 430A1) is configured to allow light emitted from the light source to enter as diffuse light in a second plane which intersects the first plane at right angles, and/or
the reflecting portions (220A3, 320A3, 430A3) are configured to allow light from the light source which enters from the second entrance portions to be reflected as diffuse light in the second plane.
